# EUROPÄISCHE PATENTSCHRIFT

(11) **EP 0 824 600 B1**
(45) Veröffentlichungstag und Bekanntmachung des Hinweises auf die Patenterteilung: **16.08.2001**
(21) Anmeldenummer: 96919661.7
(22) Anmeldetag: 03.05.1996
(51) Int. Cl.: C14C 9/00

(54) **VERFAHREN ZUR BEHANDLUNG VON LEDER MIT TENSIDEN ZUR VERBESSERUNG DER HYDROPHOBIERWIRKUNG**
PROCESS FOR TREATING LEATHERS WITH SURFACTANTS TO IMPROVE THEIR WATER-PROOFING
PROCEDE DE TRAITEMENT DE CUIRS AVEC DES AGENTS TENSIOACTIFS SERVANT A AMELIORER LEUR IMPERMEABILITE

(30) Priorität: 12.05.1995 DE 19516963
(43) Veröffentlichungstag der Anmeldung: 25.02.1998
(73) Patentinhaber: STOCKHAUSEN GmbH & Co. KG, 47805 Krefeld (DE)
(72) Erfinder: KAUSSEN, Manfred, D-52080 Aachen (DE)
(74) Vertreter: Dannappel, Hans-Jochen
(86) Internationale Anmeldenummer: EP9601850
(87) Internationale Veröffentlichungsnummer: WO9635814

(56) Entgegenhaltungen:
- EP-A- 0 213 480
- WO-A-95/13400
- WO-A-95/27800
- DE-A- 4 415 062
- US-A- 2 964 425

## Beschreibung

Die Erfindung betrifft ein Verfahren zur Behandlung von Häuten oder Fellen sowie von gegerbtem Leder und Pelz mit speziellen Tensiden zur Verbesserung der Hydrophobierwirkung.

Zur Herstellung hydrophobierter Leder werden alle hydrophil wirkenden Substanzen im Laufe des Herstellprozesses weitestgehend gemieden, da sie die wasserabweisende Wirkung der fertigen Leder negativ beeinflussen können. Hierzu zählen insbesondere salzartige Verbindungen und oberflächenaktive Substanzen wie beispielsweise Tenside. Dennoch ist ein vollständiger Verzicht auf den Einsatz dieser Netz-, Wasch- und Weich-sowie Dispergier- und Entfettungsmittel nicht möglich, da eine ausreichende und gleichmäßige Entfettung zur Herstellung qualitativ guter Artikel notwendig ist. In der Praxis behalf man sich dadurch, möglichst mild wirkende, nichtionogene Tenside in minimalen Mengen einzusetzen, so daß ein Kompromiß zwischen dem notwendigen Tensideinsatz zur Entfettung und einer dadurch hervorgerufenen negativen Beeinflussung des wet-blue-Materials bezüglich der Hydrophobierung erfolgte.

Darüber hinaus hat sich durch den immer größer werdenden Anteil an weltweit eingearbeitetem wet-blue-Material als Zwischenprodukt häufig die Notwendigkeit ergeben, eine sogenannte Wäsche durchzuführen, weil das betreffende wet-blue-Material, bevorzugt aus Gründen einer raschen Durcharbeitung, nur unzureichend gründlich entfettet und vorbereitet wurde. Weiter ist zu beachten, daß die verschiedenen wet-blue-Materialien oftmals von unterschiedlicher Qualität sind und der Bedarf besteht, die unterschiedlichen wet-blue-Materialien in einem Arbeitsgang zu einem einheitlichen Endprodukt zu verarbeiten.

Eine andere Möglichkeit der Qualitätsminderung ist die Autoxidation des verbliebenen Naturfettes in der der Luft zugewandten Narbenschicht bei länger anhaltender Lagerung, die bei wet-blue-Material durchaus auftreten kann (Lagerzeiten bis zu einem Jahr sind möglich). Beide Erscheinungen können dazu führen, daß das Hydrophobiermittel unzureichend in das Leder eindringen und damit seine Wirkung nicht voll entfalten kann.

Es war deshalb Aufgabe der Erfindung, Hilfsmittel und/oder Technologien bereitzustellen, durch Behandeln des wet-blue oder der Häute und Felle in der Wasserwerkstatt zu einer Verbesserung der Hydrophobierwirkung zu gelangen. Diese Substanzen mußten deshalb eine ausreichende Dispergier- oder Emulgierwirkung haben.
In der DE-OS 2 219 806 wird der Einsatz von Fettsäureamiden als Fettungsmittel für Materialien faseriger Struktur offenbart. Das Fetten von Leder hat zum Ziel, dem Material einen angenehmen schmalzigen Griff zu verleihen und hat mit der Hydrophobierung von Leder nichts zu tun, vielmehr hat die Fettung von Leder zum Ziel, ein weiches Leder zu erzeugen. Bevorzugte Verbindungen danach sind die Kondensationsprodukte der Aminocarbonsäuren Sarkosin, β-Alanin, o-Amino-benzol-carbonsäure und ε-Aminocapronsäure mit Fettsäuren natürlichen Ursprungs. Die beanspruchten Verbindungen werden ausschließlich zur Fettung bereits nachgegerbter Leder eingesetzt. Bei dieser Applikation wird geringere Wasserzügigkeit beobachtet. Sie erfolgt ausschließlich in der Likkerfettung.

In EP 0 213 480 werden Ölsäuresarkosid und andere Sarkoside als Emulgatoren für Silikonöle und ein Verfahren zum Hydrophobieren von Leder und Pelzen mit diesen Silikonölemulsionen beschrieben. Dabei wird die Verwendung von Salzen von N(C₉-C₂₀-Acyl-)aminosäuren zum Emulgieren von Silikonöl in wäßriger Phase bei der Hydrophobierung beansprucht. Dieses Verfahren wird während oder nach der Nachgerbung durchgeführt.

Amide und Anilide höherer Fettsäuren sind in der Literatur als wirksame Wasch-, Netz-, Dispergier- und Egalisiermittel im Textilbereich beschrieben (DE 635 522) und werden angewendet. Wegen dieser ausgesprochen hydrophilen Eigenschaften sind sie im Rahmen der Hydrophobierung gemieden: Wie bei fast allen Hydrophobiermitteln beeinträchtigen alle Tenside oder stark emulgierte Fettungsmittel auch hier die wasserabweisende Wirkung (BASF, Techn. Merkblatt zu Densodrin S, Ausgabe Mai 1988).

Es wurde nun überraschenderweise gefunden, daß der Einsatz spezieller oberflächenaktiver Substanzen trotz ihrer hydrophilen Wirkung zu einer Verbesserung der wasserabweisenden Wirkung führt. Die verwendeten Tenside sind die Sarkoside, also Verbindungen vom Typ RCO-N(CH₃)CH₂COO-. Als Säurekomponenten sind gesättigte und ungesättigte Fettsäuren und hier besonders die längerkettigen im Bereich von 16 - 22 C-Atomen bevorzugt, ganz besonders die Ölsäure. Derartige Sarkoside unterstützen die Ausbildung von Öl-in-Wasser-Emulsionen. Ihre Oberflächenaktivität in wäßriger Lösung ist am stärksten ausgeprägt bei leicht saurem pH-Wert. Daher erfolgt die Anwendung unmittelbar nach Einarbeitung des wet-blue als Wäsche oder Broschur bzw. in der Neutralisation.

Der Einsatz derartiger Komponenten im Rahmen der Wasserwerkstatt-Arbeiten ist ebenfalls möglich. So bietet sich der Einsatz in der Entfettung an, da diese Tenside sehr leicht Emulsionen von Fettstoffen bilden können.

Die Produkte kommen in Form ihrer wasserlöslichen Salze, z. B. als Alkalisalze, insbesondere des Natriums oder Kaliums, als Ammoniumsalze oder als Salze eines Mono-, Di- oder Trialkanolamins zum Einsatz, wobei Mono-, Di- oder Triethanolamin bevorzugt sind. Die Einsatzmengen liegen zwischen 0,5 - 5 %, bevorzugt zwischen 1 und 5 %, bezogen entweder auf Blößengewicht oder auf Falzgewicht je nach Einsatzgebiet.

Wegen ihrer guten Löslichkeit und Konsistenz sind 20 - 50 gew.-%ige Anwendungskonzentrationen bevorzugt.

Neben Sarkosiden sind auch die nicht-ionigenen Alkylpolyglykoside in den zuvor beschriebenen Einsatzgebieten wirksam. Zur Verstärkung der Entfettung bieten sie sich aufgrund ihrer geringen Schaumbildung und ihrer ausgeprägten Eigenschaft, Mikroemulsionen herzustellen, an. Bevorzugt sind Typen, deren Rest an der Glucoseeinheit mindestens im Bereich C₁₂-C₁₆, besser C₁₆-C₁₈ oder langkettiger ist. Dieser Rest kann gesättigt, ungesättigt, geradkettig oder verzweigt sein. Um zu hohe Hydrophilie zu vermeiden, wird ein Glucosidierungsgrad von 1 bis 3 bevorzugt. Die Alkypolyglykoside liegen in fester bis wachsartiger Konsistenz vor. Sie zeigen gute Eigenschaften beim gemeinsamen Einsatz mit anderen Tensiden wie z. B. den Sarkosiden.

Weitere geeignete Tenside für den beschriebenen Anwendungsbereich stellen Polyethylenglykolcarboxyalkylether dar. Diese Ethercarbonsäuren der allgemeinen Formel R(OC₂H₄)ₙOCH₂COOH eignen sich bevorzugt bei Vorhandensein eines hydrophoben Anteils wie C₁₆-C₁₈ und Werte für n zwischen 2 und 5.

Die Produkte gelangen in Form ihrer wäßrigen Lösung, meist 50 - 70 Gew.-% w. S., zur Anwendung. Die Einsatzmengen liegen zwischen 0,5 bis 5 Gew.-%, bezogen auf Blößen- bzw. Falzgewicht, bevorzugt für Blößen bei 0,5 - 3 Gew.-%, bei der wet-blue-Wäsche bzw. Broschur bei 2 - 5 Gew.-%.

Bevorzugt werden alle erfindungsgemäß verwendeten Tenside für Blößen in Mengen von 0,5 bis 3 Gew.-%, bei der wet-blue-Wäsche bzw. Broschur in Mengen von 2 bis 5 Gew.% eingesetzt.

Der Einsatz der Tenside erfolgt in bekannter Weise aus der wäßrigen Flotte. Die nachfolgenden Schritte der Lederherstellung werden nicht verändert. Es entstehen hochwertige und stark hydrophobierte Leder mit guten grifflichen und physikalischen Eigenschaften.

Die Hydrophobierung erfolgt nach bekannten Methoden und mit bekannten Mitteln.

Die nachfolgenden Ausführungsbeispiele belegen das erfindungsgemäße Verfahren:

### Beispiele

Als Standardarbeitsweise wurde wie folgt verfahren:

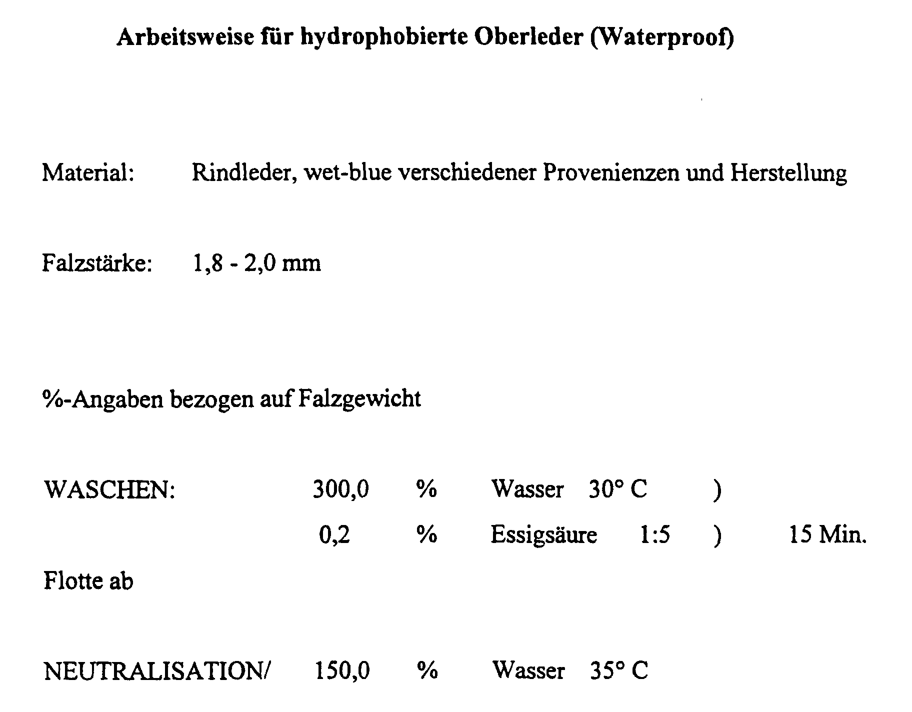

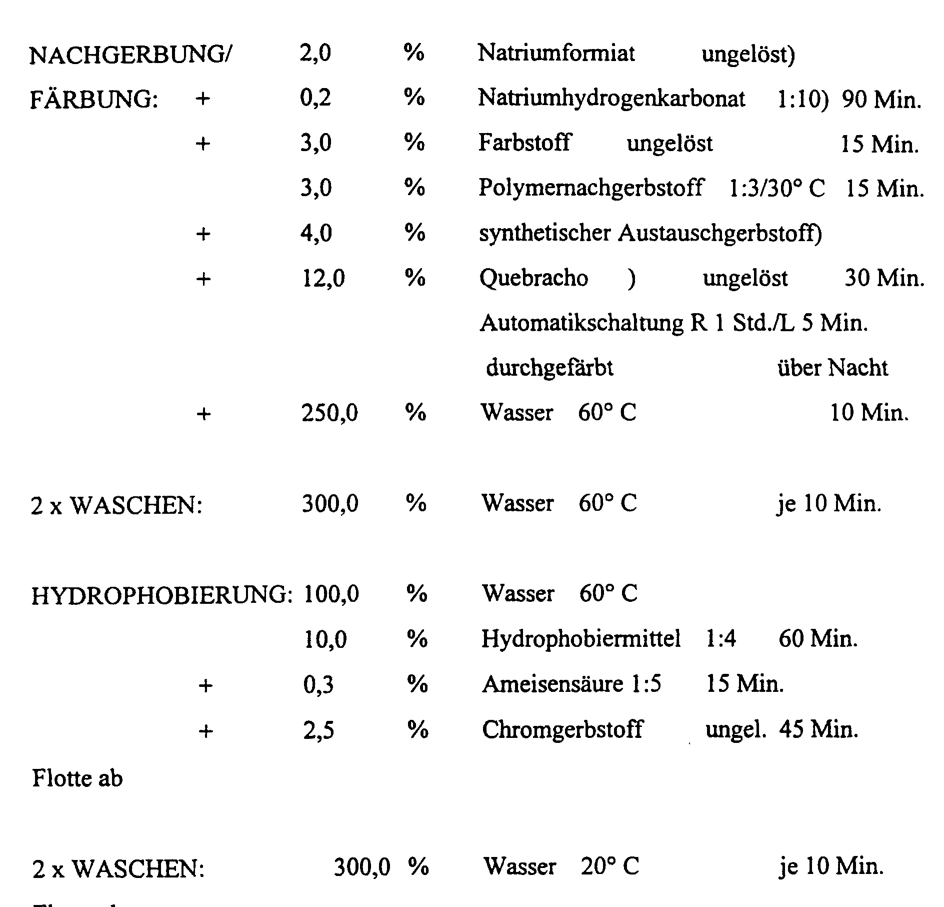

Leder über Nacht auf Bock, abwelken, ausrecken, vakuumtrocknen (4 Min./80° C), konditionieren, stollen, bügeln.

### Beispiel 1

Im Vergleich zu der Standardarbeitsweise wurde in einem Parallelversuch nach der Neutralisation mit 5 % einer 20 Gew. % Lösung von Ölsäuresarkosid-Monoethanolaminsalz bei 35° C über 60 Minuten behandelt. Die Hydrophobierung erfolgte mit einem Produkt auf Basis Sulfobernsteinsäureester mit Polymeranteilen.

Während das lediglich mit dem Hydrophobiermittel behandelte Leder im Bally-Penetrometer Wasserdurchtritt nach 44 Minuten zeigte (10 % Stauchung), wurde durch die erfindungsgemäße Behandlung die Wasserdurchtrittszeit auf > 420 Minuten (10 % Stauchung) erhöht.

### Beispiel 2

Bei einer anderen wet-blue-Provenienz als in Beispiel 1 wurde analog Beispiel 1 gearbeitet. Als Hydrophobiermittel wurde eine Paraffin- und Silikonölemulsion eingesetzt.

Während die Hydrophobierung nach der Standardarbeitsweise bezüglich der Bally-Penetrometer-Wasserdurchtrittswerte vergleichbare Ergebnisse (beide > 420 Minuten bei 10 % Stauchung) lieferte, führte die Tensidbehandlung zu einer deutlichen Abnahme der Wasseraufnahme von 20 auf 9 %.

### Beispiel 3

Wet-blue-Material wurde wie in Beispiel 1 beschrieben behandelt. Im Parallelversuch wurde durch Mitverwendung von Ölsäuresarkosid-MEA-Salz das Ergebnis im Maeser-Test von 215 Knickungen auf 12.400 Knickungen verbessert, was eine gute Hydrophobierung darstellt.

### Beispiel 4

Das gleiche wet-blue-Material wie bei Beispiel 3 wurde analog Beispiel 1, aber mit dem Hydrophobiermittel auf Basis Paraffin und Silikonöl gearbeitet.

Durch die Anwendung von Ölsäuresarkosid-MEA-Salz in der Neutralisation wurde der sehr gute Wert für den Maeser-Test von 67.950 auf 110.500 Flexen verbessert.

## Patentansprüche

1. Verfahren zum Hydrophobieren von Häuten, Fellen, Ledern und Pelzen sowie sonstigen faserigen Materialien, dadurch gekennzeichnet, daß in der Wasserwerkstatt und/oder bei der Behandlung des wet-blue Sarkoside, Alkylpolyglykoside oder Polyethylenglykolcarboxyalkylether als Tenside eingesetzt werden und nachfolgend eine Hydrophobierung nach an sich bekannten Methoden und mit an sich bekannten Mitteln erfolgt.

2. Verfahren nach Anspruch 1, dadurch gekennzeichnet, daß als Sarkoside Salze von N-Acyl-aminosäuren eingesetzt werden.

3. Verfahren nach Anspruch 2, dadurch gekennzeichnet, daß als Salze von N-Acyl-aminosäuren deren wasserlösliche Salze, vorzugsweise deren Alkalisalze, Ammoniumsalze oder Salze eines Mono-, Di- oder Trialkanolamins, besonders bevorzugt deren Natriumsalze, Kaliumsalze oder Salze des Mono-, Di- oder Triethanolamins, eingesetzt werden.

4. Verfahren nach einem der Ansprüche 1 bis 3, dadurch gekennzeichnet, daß sich die Säurekomponente der Sarkoside von gesättigten oder ungesättigten Fettsäuren, vorzugsweise von gesättigten oder ungesättigten Fettsäuren mit 16 bis 22 C-Atomen herleitet.

5. Verfahren nach einem der Ansprüche 1 bis 4, dadurch gekennzeichnet, daß als Sarkosid Ölsäuresarcosid-Monoethanolamin-Salz eingesetzt wird.

6. Verfahren nach Anspruch 1, dadurch gekennzeichnet, daß die Alkylpolyglykoside in fester bis wachsartiger Konsistenz vorliegen.

7. Verfahren nach Anspruch 1 oder 6, dadurch gekennzeichnet, daß die Alkylpolyglykoside an der Glucoseeinheit einen Rest mit C₁₂-C₁₆, vorzugsweise mit C₁₆-C₁₈ oder einen langkettigeren Rest aufweisen.

8. Verfahren nach einem der Ansprüche 1, 6 oder 7, dadurch gekennzeichnet, daß der Glucosidierungsgrad der Alkylpolyglykoside von 1 bis 3 beträgt.

9. Verfahren nach Anspruch 1 oder einem der Ansprüche 6 bis 8, dadurch gekennzeichnet, daß die Alkylpolyglykoside mit anderen Tensiden, vorzugsweise Sarkosiden, eingesetzt werden.

10. Verfahren nach Anspruch 1, dadurch gekennzeichnet, daß als Polyethylenglykolcarboxyalkylether Polyethylenglykolcarboxyalkylether der allgemeinen Formel R(OC₂H₄)ₙOCH₂COOH eingesetzt werden, die einen hydrophoben Anteil mit C₁₆-C₁₈ aufweisen und worin n für Werte zwischen 2 und 5 steht.

11. Verfahren nach einem der Ansprüche 1 bis 10, dadurch gekennzeichnet, daß die Tenside in wäßriger Flotte angewendet werden.

12. Verfahren nach einem der Ansprüche 1 bis 11, dadurch gekennzeichnet, daß die Tenside in Mengen von 0,5 bis 5 Gew.-%, bezogen auf Blößen- bzw. Falzgewicht eingesetzt werden.

## Claims

1. A process for waterproofing hides, skins, leathers, and furs, as well as other fibrous materials characterized in that sarcosides, alkyl polyglycosides or polyethyleneglycol carboxyalkyl ethers are used as surfactants in the beamhouse and/or in the treatment of wet blues, subsequently waterproofing said treated material by known methods and means.

2. The process according to claim 1 characterized in that salts of N-acyl-amino-acids are used as sarcosides.

3. The process according to claim 2 characterized in that the salts of N-acyl-amino acids used are those salts which are water-soluble, preferred alkali salts, ammonium salts or salts of mono-, di- or tri- alkanolamine, with mono-, di- or triethanolamine being preferred.

4. The process according to claims 1 to 3 characterized in that the acid component of the sarcosides is derived from saturated and unsaturated fatty acids, in particular those having a chain in the range of 16―22 C-atoms.

5. The process according to claims 1 to 4 characterized in that oleic acid sarcoside monoethanolamine salt is used as sarcoside.

6. The process according to claim 1 characterized in that the alkyl polyglycosides are of solid or waxy consistency.

7. The process according to claims 1 or 6 characterized in that preferred types of the alkyl polyglycosides are those whose residue at the glucose unit is at least in the range of C₁₂―C₁₆, preferrend C₁₆―C₁₈ or rather of a longer chain.

8. The process according to claims 1, 6 or 7 characterized in that the alkyl polyglycosides have a glycosidation degree of 1 to 3.

9. The process according to claims 1 or one of the claims 6 to 8 characterized in that the alkyl polyglycosides are applied together with other surfactants, preferred with sarcosides.

10. The process according to claim 1 characterized in that the polyethyleneglycol carboxyalkyl ethers are those of general formula R(0C₂H₄)ₙOCH₂COOH with a hydrophobic portion such as C₁₆―C₁₈ is present and if values for n between 2 and 5 are valid.

11. The process according to any one of claims 1 to 10 characterized in that the surfactants are used in aqueous float.

12. The process according to any one of claims 1 to 11 characterized in that the surfactants are used in amounts of 0.5 to 5%-wt., relative to the pelt or shaved weight.

## Revendications

1. Procédé pour imperméabiliser des peaux, des cuirs, et des fourrures ainsi que d'autres matériaux fibreux, caractérisé par une utilisation de sarkosine, d'Alkylepolyglycol ou de polyéthylène-glycolcarboxyalkyle d'éther comme agents tensioactifs de surface en atelier de préparation au tannage par trempage (beamhouse) et / ou en traitement par tannage minéral des peaux wet-blue pour leur donner ensuite une imperméabilisation d'après des méthodes et des moyens en principe connus.

2. Procédé dans les mêmes conditions qu'à la revendication 1, mais en remplaçant les sarkosines par des sels d'acides aminés N-Acyl.

3. Procédé dans les mêmes conditions qu'à la revendication 2, mais en utilisant eu guise de sels d'acides aminés N-Acyl, leurs sels solubles dans l'eau, de préférence leurs sels d'alcali, d'ammonium ou mono-di-ou trialkanols, ou surtout leurs sels de sodium, potassium ou leurs sels de mono-di-ou tri-éthanolamine.

4. Procédé d'après l'une des conditions des revendications 1 à 3, caractérisé par le fait que la composante des acides de sarcosine provient d'acides gras saturés ou insaturés, de préférence des acides gras saturés ou insaturés avec de 16 jusqu'à 22 atomes de C.

5. Procédé d'après l'une des conditions des revendications 1 à 4, caractérisé par le fait qu'on utilise en tant que sarcosine un sel de sarcosine d'acide oléique de monoethanolamine.

6. Procédé dans les mêmes conditions qu'à la revendication 1, caractérisé par le fait que les polyglycosides d'alkyle se présentent avec une consistance solide voire cireuse.

7. Procédé dans les mêmes conditions qu'aux revendications 1 ou 6, caractérisé par le fait que les polyglycosides d'alkyle présentent un reste de C₁₂ à C₁₆, de préférence C₁₆ à C₁₈ ou plus, à l'unité de glucose.

8. Procédé d'après une des conditions des revendications 1, 6 ou 7, caractérisé par le fait que le degré de glucose des polyglycosides d'alkyl est de 1 à 3.

9. Procédé d'après la revendication 1 ou l'une des revendications de 6 à 8, caractérisé par le fait que l'on utilise les polyglycosides d'alkyl avec d'autres agents tensioactifs de préférence des sarcosines.

10. Procédé d'après les mêmes exigences qu'à la revendication 1 caractérisé par le fait que à la place de polyéthylène-glycolcarboxyalkyle d'éther on utilise du polyéthylène-glycolcarboxyalkyle d'éther de la formule générale R(OC₂H₄)ₙOCH₂COOH qui a une part hydrophobe avec C₁₆-C₁₈ et dans laquelle n correspond à des valeurs entre 2 et 5.

11. Procédé d'après une des revendications de 1 à 10 caractérisé par le fait que les agents tensioactifs sont utilisés sous forme liquide par trempage.

12. Procédé d'après une des revendications 1 à 11 caractérisé par le fait que les agents tensioactifs sont utilisées dans un pourcentage de 0,5 à 5% par rapport au poids des peaux planées ou drayées.
